# EUROPÄISCHE PATENTANMELDUNG

(11) **EP 0 693 536 A1**
(43) Veröffentlichungstag der Anmeldung: **24.01.1996**
(21) Anmeldenummer: 95110626.9
(22) Anmeldetag: 07.07.1995
(51) Int. Cl.: C09B 62/08, C09B 62/507

(54) **Azofarbstoffe mit einer Chlortriazingruppe**

(30) Priorität: 20.07.1994 DE 4425618
(71) Anmelder: BAYER AG, D-51368 Leverkusen (DE)
(72) Erfinder: Jäger, Horst, Dr., D-51375 Leverkusen (DE); Wolff, Joachim, Dr., D-51519 Odenthal (DE)

(57) **Zusammenfassung**

Farbstoffe der Vorlage 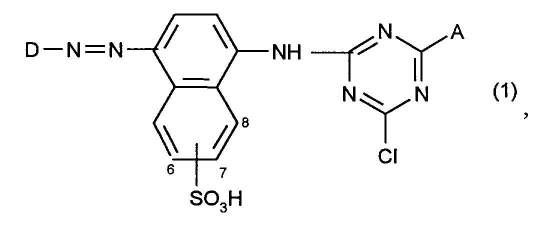
worin
- D: für 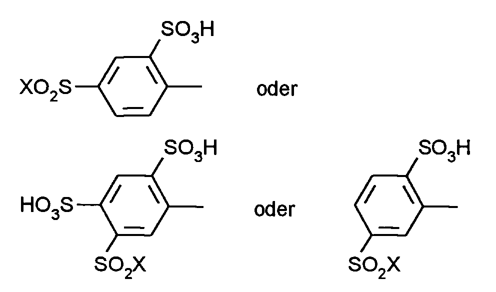 und worin
- A: für Chlor, Wasserstoff, Methyl oder durch Chlor und/oder Methyl substituiertes Phenyl oder für SR¹, OR², NR³R⁴ oder für 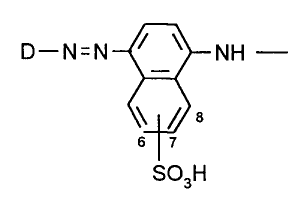 stehen,
zeigen verbesserte anwendungstechnische Eigenschaften.

## Beschreibung

Die Erfindung betrifft neue Azoreaktivfarbstoffe sowie ihre Herstellung und Verwendung.

Azoreaktivfarbstoffe sind aus zahlreichen Veröffentlichungen bekannt, z.B. EP-A-567 036 und EP-A-559 617.

Die bekannten Farbstoffe weisen aber noch anwendungstechnische Nachteile auf.

Die vorliegende Erfindung betrifft Reaktivfarbstoffe der Formel 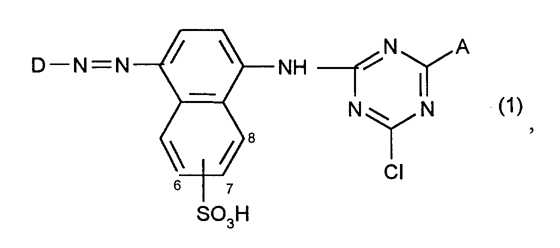
worin
- D: für 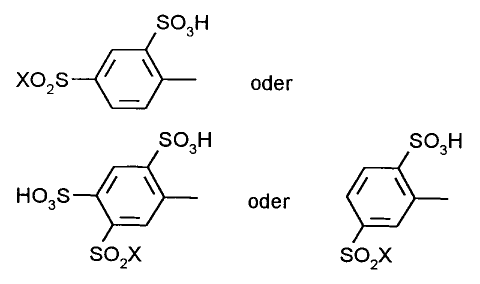 worin
- X: CH₂CH₂Z oder CH=CH₂ bedeutet,
wobei
- Z: einen unter Färbebedingungen abspaltbaren Rest darstellt, die Sulfogruppe in 6-, 7- oder 8-Stellung gebunden ist, und
- A: Chlor, Wasserstoff, Methyl oder durch Chlor und/oder Methyl substituiertes Phenyl bedeutet oder für SR¹, OR² oder für NR³R⁴ steht,
worin
- R¹: gegebenenfalls substituiertes C₁-C₄-Alkyl oder gegebenenfalls substituiertes Phenyl, Naphthyl oder 2-Benzthiazolyl bedeutet,
- R²: für Wasserstoff, gegebenenfalls substituiertes C₁-C₄-Alkyl oder gegebenenfalls substituiertes Phenyl oder Naphthyl steht,
- R³: für Wasserstoff oder einen gegebenenfalls substituierten aliphatischen, cycloaliphtischen, heterocyclischen oder araliphatischen Rest steht und
- R⁴: für Wasserstoff oder einen gegebenenfalls substituierten aliphatischen, cycloaliphatischen, heterocyclischen, araliphatischen oder aromatischen Rest steht oder worin R³ und R⁴, gegebenenfalls unter Einschluß eines weiteren Heteroatoms, einen 5- oder 6-gliedrigen Ring bilden können oder worin
- A: für den Rest 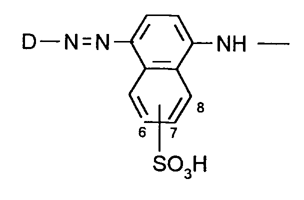 steht.

Beispiele für mögliche Substituenten der C₁-C₄-Alkylreste in der Bedeutung von R¹ bzw. R² sind:
OH, COOH, SO₃H, OSO₃H
Beispiele für mögliche Substituenten der Phenyl-, Naphthyl- bzw. 2-Benzthiazolylreste in der Bedeutung von R¹ bzw. R² sind:
CH₃, CH₃O, Cl, COOH, SO₃H oder NO₂
Die aliphatischen Reste in der Bedeutung von R³ und R⁴ sind vorzugsweise Alkylreste, insbesondere mit 1 bis 6 C-Atomen, die gegebenenfalls durch Heteroatome unterbrochen und die gegebenenfalls substituiert sind, wobei unterbrechende Heteroatome, beispielsweise O, S, SO₂, NR⁵ (R⁵ = Wasserstoff, C₁-C₄-Alkyl), NR⁵CO oder NR⁵SO₂ sind und mögliche Substituenten beispielsweise OH, Cl, F, COOH,SO₃H, OSO₃H, SO₂CH=CH₂,CN, SO₂CH₂CH₂Cl oder SO₂CH₂CH₂OSO₃H sind.

Die cycloaliphatischen Reste in der Bedeutung von R³ bzw. R⁴ sind vorzugsweise 5- oder 6-gliedrige Cycloalkylreste.

Die heterocyclischen Reste in der Bedeutung von R³ und R⁴ sind vorzugsweise 5- oder 6-gliedrige Cycloalkylringe, die durch Heteroatome, insbesondere SO₂, O oder N unterbrochen sind.

Die araliphatischen Reste in der Bedeutung von R³ bzw. R⁴ sind beispielsweise solche der Formel 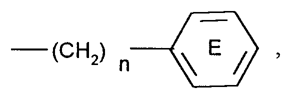
wobei n eine ganze Zahl von 1 bis 4 und der Rest E substituiert sein kann, beispielsweise durch Cl, NO₂, COOH, SO₃H, CH₃, OCH₃, SO₂CH₂CH₂OSO₃H, SO₂CH=CH₂ oder CH₂SO₂CH₂CH₂OSO₃H.

Aromatische Reste in der Bedeutung von R⁴ sind vorzugsweise Phenyl- oder Naphthylreste, die gegebenenfalls substituiert sind, beispielsweise mit OCH₃, OC₂H₅, OCH₂CH₂OH, CH₃, C₂H₅, -CH(CH₃)₂, F, Cl, Br, COOH, SO₃H, NO₂, SO₂CH₂CH₂OSO₃H, SO₂CH=CH₂, CH₂SO₂CH₂CH₂OSO₃H, CH₂SO₂CH=CH₂, 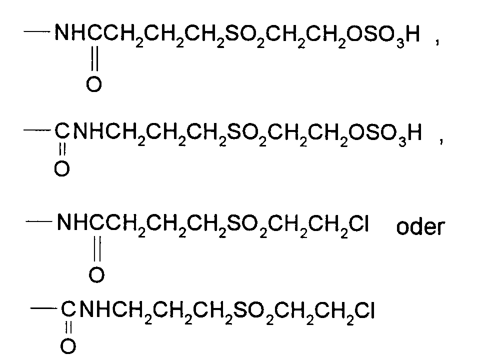
Heteroatome zur Ringbildung des Restes -NR³R⁴ können weiter substituiert sein, bevorzugt -O-, -NH-, 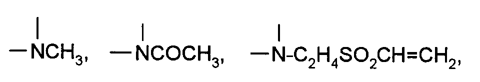
-S-, -SO- oder -SO₂- .

Für Z seien beispielhaft folgende Reste genannt:
-OSO₃H, -OPO₃H₂, -OCOCH₃, -Cl, -OSO₂CH₃. Bevorzugt steht Z für -OSO₃H.

Im Rahmen der Formel sind folgende Farbstoffe bevorzugt: 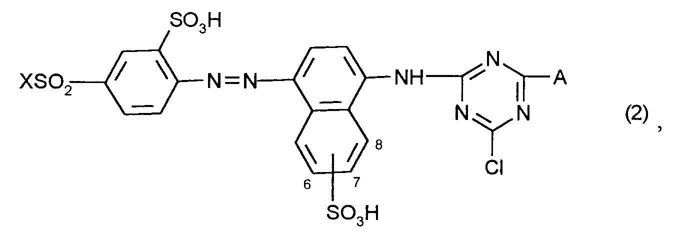
worin die Sulfogruppe in 6-, 7- oder 8-Stellung stehen kann; 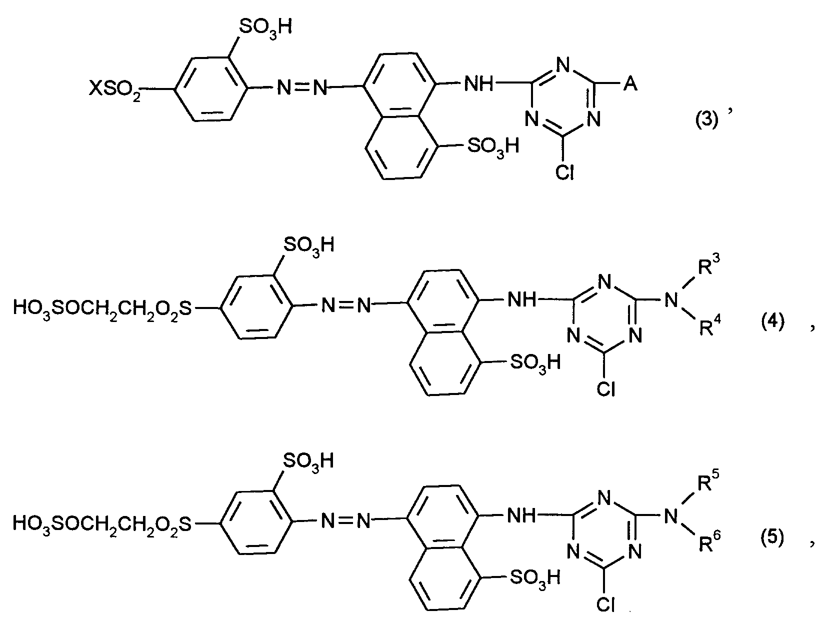
worin
- R⁵: Wasserstoff, Methyl, Ethyl, Hydroxyethyl und
- R⁶: Phenyl bedeutet, das gegebenenfalls durch Sulfo, Carboxy, Chlor, Methyl, Ethyl, Methoxy, Ethoxy und/oder β-Sulfatoethylsulfonyl substituiert ist;

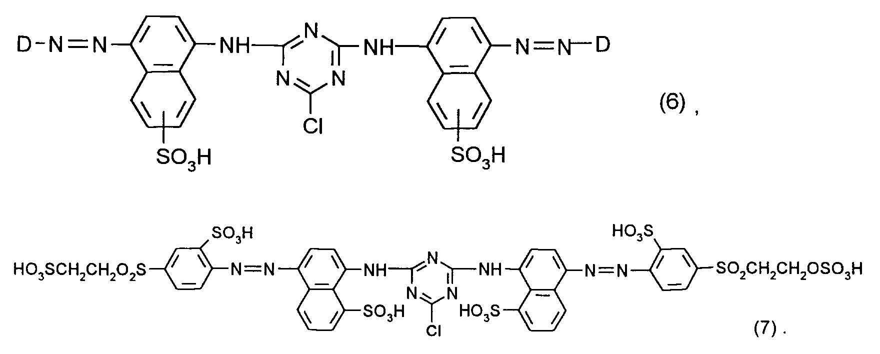

Die Reaktionsbedingungen der Herstellung entsprechen den auf dem Gebiet der Acylierung, Diazotierung und Kupplung üblichen Bedingungen. So erfolgt die Herstellung der erfindungsgemäßen Farbstoffzwischenprodukte vorzugsweise im wäßrigen Medium.

Dabei werden Diazokomponenten der allgemeinen Formel

D-NH₂ (6),

worin D die angebene Bedeutung hat, diazotiert und mit Kupplungskomponenten der allgemeinen Formel 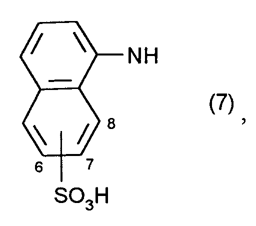
worin die Sulfogruppe in 6-, 7- oder 8-Stellung steht, im pH-Bereich von 2 bis 6 zu einem Aminoazofarbstoff der Formel 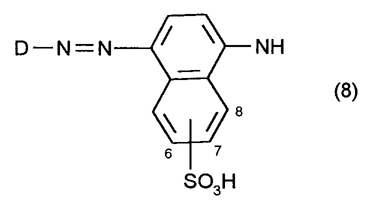
vereinigt und dieser dann mit einem Triazinderivat der allgemeinen Formel 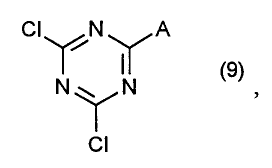
worin A die angegebene Bedeutung hat, zu einem Farbstoff der Formel (1) kondensiert. Wenn in (9) A für Chlor steht, kann in einer weiteren Kondensationsstufe das Chloratom mit einer Verbindung der allgemeinen Formel

H-A¹ (10),

worin
- A¹: für SR¹, OR² oder NR³R⁴ steht,
kondensiert werden, wobei gleichfalls Farbstoffe der Formel (1) entstehen. Außerdem können Eliminierungsreaktionen an die Synthese angeschlossen werden. Beispielsweise kann man Reaktivfarbstoffe der Formel (1), welche Sulfatoethylsulfonylreste enthalten, mit einer Base, wie z. B. Natriumhydroxid, behandeln, wobei die Sulfatoethylsulfonylreste in Vinylsulfonylreste übergehen.

Beispiele für Verbindungen der Formel (6), (7), (9) und (10) sind folgende:

### Formel (6):

4-β-Sulfatoethylsulfonyl-anilin-2-sulfonsäure
5-β-Sulfatoethylsulfonyl-anilin-2-sulfonsäure
5-β-Sulfatoethylsulfonyl-anilin-2,4-disulfonsäure
4-β-Sulfatoethylsulfonyl-anilin-3-sulfonsäure
4-Vinylsulfonyl-anilin-2-sulfonsäure

### Formel (7):

1-Amino-naphthalin-6-sulfonsäure
1-Amino-naphthalin-7-sulfonsäure
1-Amino-naphthalin-8-sulfonsäure

### Formel (9):

2,4,6-Trichlortriazin
4,6-Dichlortriazin
2-Methyl-4,6-dichlortriazin
2-Phenyl-4,6-dichlortriazin
2-Methoxy-4,6-dichlortriazin
2-Ethoxy-4,6-dichlortriazin
2-β-Methoxyethoxydichlortriazin
2-Isopropoxy-4,6-dichlortriazin
2-Methylmercapto-4,6-dichlortriazin
2-β-Hydroxyalkylmercapto-4,6-dichlortriazin
2-Carboxymethylmercapto-4,6-dichlortriazin
sowie insbesondere die Triazinverbindung der Formel 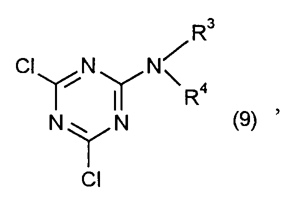
worin R³ und R⁴ die angegebene Bedeutung haben.

### Formel (10):

Ammoniak, Methylamin, Dimethylamin, Ethylamin, Diethylamin, Propylamin, Isopropylamin, Butylamin, Dibutylamin, Isobutylamin, sek.-Butylamin, tert.-Butylamin, Hexylamin, Methoxyethylamin, Ethoxyethylamin, Methoxypropylamin, Chlorethylamin, Hydroxyethylamin, Dihydroxyethylamin, Hydroxypropylamin, Aminoethansulfonsäure, β-Sulfatoethylamin, Benzylamin, Phenethylamin, Cyclohexylamin, N-Propylaminobenzol, N-Isopropylaminobenzol, N-Butylaminobenzol, N-Isobutylaminobenzol, N-sek.-Butylaminobenzol, N-Hexylaminobenzol, N-β-Hydroxyethylaminobenzol, N-β-Chlorethylaminobenzol, N-β-Cyanethylaminobenzol, N-β-Sulfatoethylaminobenzol, 1-(N-Ethylamino)-2,3- oder -4-methylbenzol, 1-(N-Ethylamino)-2-, -3- oder -4-ethylbenzol, 1-(N-Ethylamino-2, -3- oder -4-chlorbenzol, 1-N-Ethylamino-3- oder -4-sulfonsäure, 1-(N-Ethylamino)-4-butylbenzol, 1-(N-Ethylamino)-4-hexylbenzol, 1-(N-Ethylamino)-4-octylbenzol, 1-(N-Ethylamino)-4-vinylbenzol, 1-N-n-Butylamino-3-(methylbenzol), 1-(N-Ethylamino)-4-fluorbenzol, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Ethylanilin, 3- oder 4-Acetylaminoanilin, 2,5-Dimethoxyanilin, o-, m- und p-Anisidin, o-, m- und p-Phenetidin, 2-Methoxy-5-methylanilin, 2-Ethoxy-5-methoxyanilin, 4-Bromanilin, 3-Aminobenzamid, 4-Aminophenylsulfamid, 3-Trifluormethylanilin, 3- und 4-Aminophenylsulfamid, 3-Trifluormethylanilin, 3- und 4-Aminophenylharnstoff, 1-Naphthylamin, 2-Naphthylamin, Orthanilsäure, Metanilsäure, Sulfanilsäure, Anilin-2,4-disulfonsäure, Anilin-2,5-disulfonsäure, Anilin-3,5-disulfonsäure, Anthranilsäure, m- und p-Aminobenzoesäure, 4-Aminophenylmethansulfonsäure, Anilin-N-methan-sulfonsäure, 2-Aminotoluol-4-sulfonsäure, 2-Aminotoluol-5-sulfonsäure, p-Aminosalicylsäure, 1-Amino-4-carboxy-benzol-3-sulfonsäure, 1-Amino-2-carboxybenzol-5-sulfonsäure, 1-Amino-5-carboxy-benzol-2-sulfonsäure, 1-Naphthylamin-2-, -3-, -4-, -5-, -6-, -7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,8- und -5,8-disulfonsäure, 2-Naphthylamin-1,5-, -1,6-, -1,7-, -3,6-, -3,7-, -4,7-, -4,8-, -5,7-und -6,8-disulfonsäure, 1-Naphthylamin-2,4,6-, -2,4,7-, -2,5,7-, -3,6,8- und -4,6,8-trisulfonsäure, 2-Naphthylamin-1,3,7-, -1,5,7-, -3,5,7-, -3,6,8- und -4,8,8-trisulfonsäure, 2-, 3- und 4-Aminopyridin, 2-Aminobenzthiazol, 5-, 6- und 8-Aminochinolin, Aminopyrimidin, Morpholin, Piperidin, Piperazin
sowie aliphatische und aromatische Amine, die durch den Rest SO₂X, wobei X die angegebene Bedeutung hat, substituiert sind, zum Beispiel folgende:
H₂N(CH₂)₂₋₄SO₂CH₂CH₂OSO₃H
H₂N(CH₂)₂O(CH₂)₂SO₂CH₂CH₂OSO₃H
H₂N(CH₂)₂O(CH₂)₂SO₂CH=CH 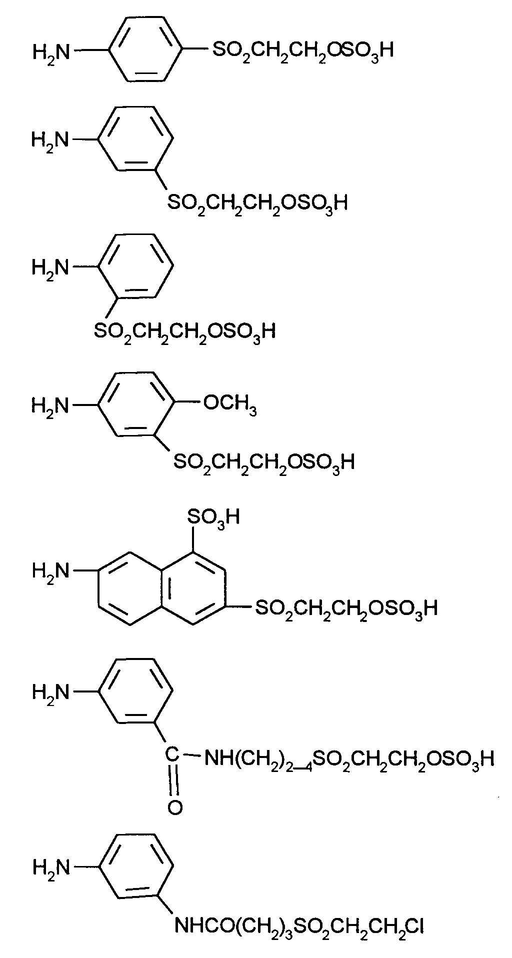
Die Isolierung der nach den vorstehenden beschriebenen Verfahren erhaltenen Reaktivfarbstoffe erfolgt in üblicher Weise durch Aussalzen, beispielsweise mit Natrium- oder Kaliumchlorid, oder durch Eindampfen der neutralen wäßrigen Farbstofflösung, vorzugsweise bei mäßig erhöhter Temperatur und vermindertem Druck oder durch Sprühtrocknung. Die Farbstoffe können als Feststoffformierungen wie auch als konzentrierte Lösungen eingesetzt werden.

In einer bevorzugten Ausführungsform werden die Farbstoffe als Granulate verwendet. Die Granulate der Farbstoffe können in folgenden Schritten erhalten werden:

### Mischgranulierung

Dabei wird das Farbstoffpulver mit 15 bis 55 % Wasser - bezogen auf das Gemisch des Pulvers - befeuchtet, anschließend in einem Mischgranulator das Gemisch geformt und dann getrocknet und entstaubt, wobei das Entstaubungsmittel als Aerosolgemisch auf das Granulat gesprüht wird.

### Sprühgranulierung

Dabei wird die Syntheselösung oder -suspension in einem fluidisierenden Sprühtrockner gleichzeitig getrocknet und granuliert.

Farbstoffpulver oder Farbstoffgranulate enthalten im allgemeinen (in Gew.-%) 30 bis 80 % eines Reaktivfarbstoffes der Formel (1), 5 bis 15 % Wasser, jeweils bezogen auf die Gesamtzusammensetzung. Daneben können sie noch anorganische Salze wie Alkalichloride oder Alkalisulfate, Dispergiermittel und Entstaubungsmittel enthalten.

Bevorzugte Feststoffmischungen enthalten zusätzlich Puffersubstanzen, die beim Auflösen in der 20-fachen Menge Wasser (bezogen auf das Gewicht der Farbstoffformierung) einen pH-Wert von 3,5 bis 7,5, insbesondere 4,5 bis 6,5 geben. Diese Puffermischungen werden in Mengen von 3 bis 50, insbesondere 5 bis 15 Gew.-%, bezogen auf das Gesamtgewicht, zugesetzt.

Wäßrige Reaktivfarbstofflösungen enthalten im allgemeinen 5 bis 50 % eines Farbstoffs der Formel (1) (bezogen auf das Gesamtgewicht der Lösung).

Bevorzugte wäßrige Reaktivfarbstofflösungen enthalten zusätzlich Puffersubstanzen und weisen einen pH-Wert von 3,5 bis 7,5, insbesondere 4,5 bis 6,5 auf. Diese Puffersubstanzen werden vorzugsweise in Mengen von 0,1 bis 50 %, insbesondere 1 bis 20 Gew.-%, bezogen auf das Gesamtgewicht, zugesetzt.

Die verwendeten Puffer sind inert gegenüber den Reaktivgruppen. Beispiele für Puffer sind: Natriumdihydrogenphosphat, Dinatriumhydrogenphosphat, Kaliumdihydrogenphosphat, Dikaliumhydrogenphosphat, Natriumacetat, Kaliumacetat, Natriumborat, Kaliumborat, Natriumoxalat, Kaliumoxalat und Natriumhydrogenphthalat. Diese Puffer können für sich allein oder in Mischung verwendet werden.

Die Azoverbindungen (1) besitzen wertvolle Farbstoffeigenschaften. Infolge der faserreaktiven Gruppe SO₂X und des Chlortriazinyl-Restes weisen sie faserreaktive Eigenschaften auf.

Die Reaktivfarbstoffe der Formel (1) ergeben Färbungen mit guten Naß- und Lichtechtheiten. Besonders hervorzuheben ist es, daß die Farbstoffe eine gute Löslichkeit und Elektrolytlöslichkeit bei guten Auszieheigenschaften und hoher Farbstoff-Fixierung aufweisen, und daß sich die nicht fixierten Anteile lacht entfernen lassen.

Die neuen Farbstoffe der Formel (1) eignen sich zum Färben und Bedrucken von Hydroxy- oder Amidgruppen enthaltenen Materialien, wie Textilfaser, Fäden und Geweben aus Wolle, Seide, synthetischen Polyamid- und Polyurethanfasern und zum waschechten Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekannt gewordenen Verfahren erfolgt.

Die angegebenen Formeln sind die der entsprechenden freien Säuren. Die Farbstoffe wurden im allgemeinen in Form von Alkalisalzen, insbesondere der Na-Salze isoliert und zum Färben eingesetzt.

Die angegebenen Farbstoffe können in reiner Form oder in Mischung mit anderen Farbstoffen, insbesondere Reaktivfarbstoffen aber auch Dispersionsfarbstoffen, eingesetzt werden. Sie lassen sich sowohl in fester Form als Pulver oder Granulate oder als Flüssigformierungen einsetzen. Flüssigformierungen und Präparate können nach üblichen Methoden gereinigt werden, beispielsweise durch Verwendung von Membranverfahren. Die Herstellung von Granulaten kann in üblicher Weise erfolgen, beispielsweise durch Kopplung von Membranen und Granuliervorrichtungen.

### Beispiel 1

### a) Diazotierung

36,1 g 4-(β-Sulfatoethylsulfonyl)-anilin-2-sulfonsäure werden in 500 ml Eiswasser mit 28 ml 30%iger Salzsäure versetzt. Man gibt Natriumnitritlösung zu und rührt solange nach, bis nur noch ein geringer Überschuß an Nitrit zu erkennen ist. Dieser wird dann mit Amidosulfonsäure zerstört.

### b) Kupplung

21,3 g 1-Amino-naphthalin-8-sulfonsäure werden in 400 ml Wasser neutral gelöst. Diese Lösung gibt man zu der nach a) erhaltenen Lösung der Diazotierung und stellt dann den pH der Mischung auf 3 bis 4 ein und rührt solange bis die Kupplung beendet ist.

### c) Kondensation

Die nach a) erhaltene Lösung des Monoazofarbstoffs der Formel 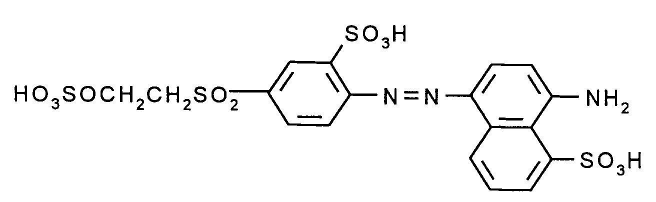
wird auf 10 bis 12°C abgekühlt und mit 19 g Cyanurchlorid versetzt. Dabei wird der pH durch Zugabe von Natriumhydrogencarbonat bei pH 5 bis 6 gehalten. Man rührt solange bis die Acylierung beendet ist. Man setzt dann 17,3 g 1-Aminobenzol-3-sulfonsäure in Form einer neutralen wäßrigen lösung zu, erhöht die Temperatur auf 40 bis 50°C und hält den pH im Bereich von 5 bis 6. Nach beendeter Kondensation wird der Farbstoff aus der Klaren Lösung mit Kaliumchlorid ausgesalzen, abgesaugt, getrocknet und gemahlen. Man erhält ein orangefarbenes Pulver, das sich leicht in Wasser mit gelber Farbe löst.

Der Farbstoff entspricht folgender Formel 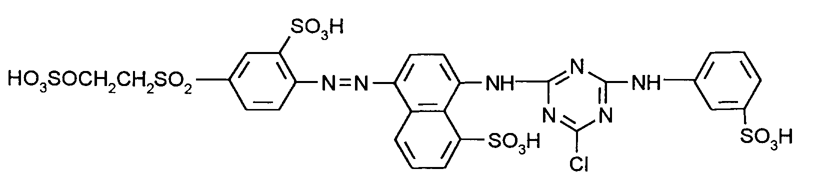
λₘₐₓ 422
Nach einem der für Reaktivfarbstoffe mit diesen Reaktivgruppen üblichen Färbeverfahren erhält man damit auf Baumwolle Klare rotstichige gelbe Färbungen mit sehr guten Lichtechtheiten und hoher Stabilität gegen die Einwirkung von Chlor.

Wenn man nach den Angaben dieses Beispiels verfährt, jedoch für Stufe a) die in Spalte 2 genannten Diazokomponenten, für Stufe b) die in Spalte 3 aufgeführten Kupplungskomponenten und für Stufe c) die in Spalte 4 beschriebenen Aminkomponenten verwendet, so resultieren gleichfalls wertvolle Baumwollreaktiv-farbstoffe, die Baumwolle in klaren rotstichig gelben Tönen färben.

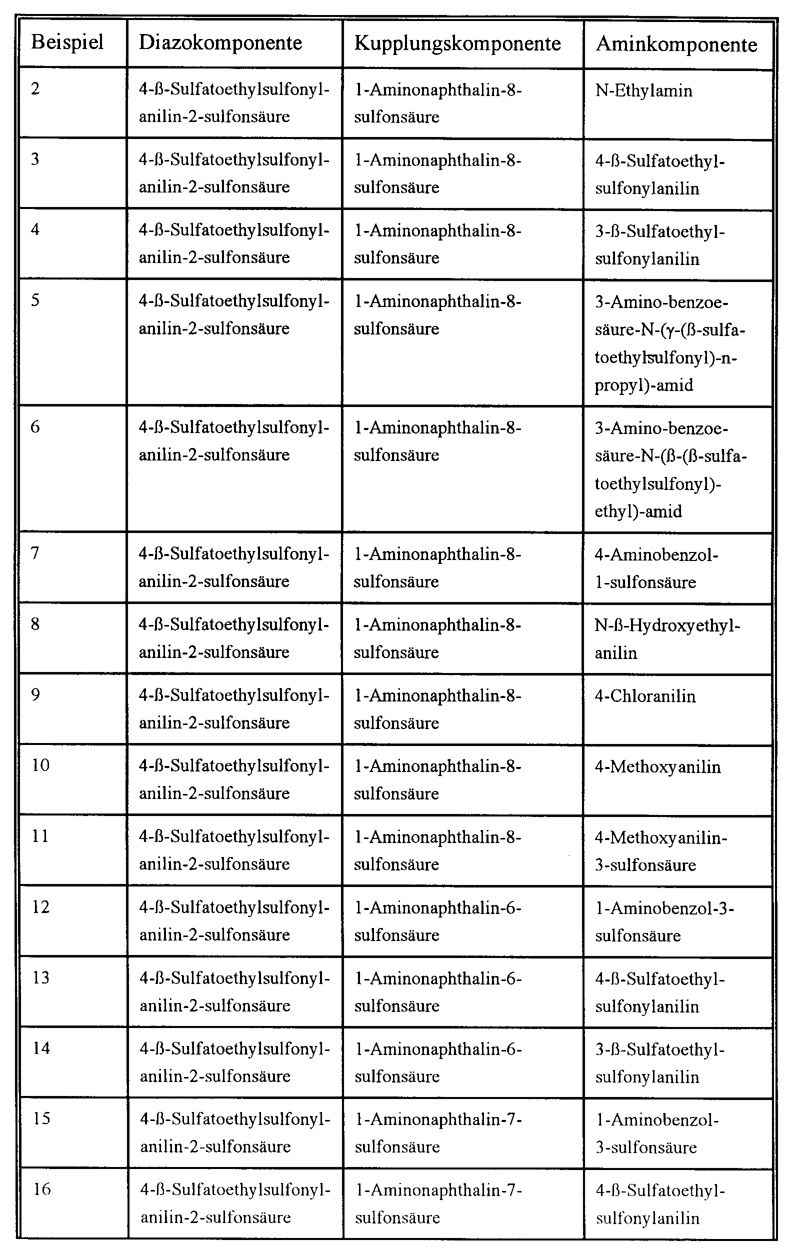

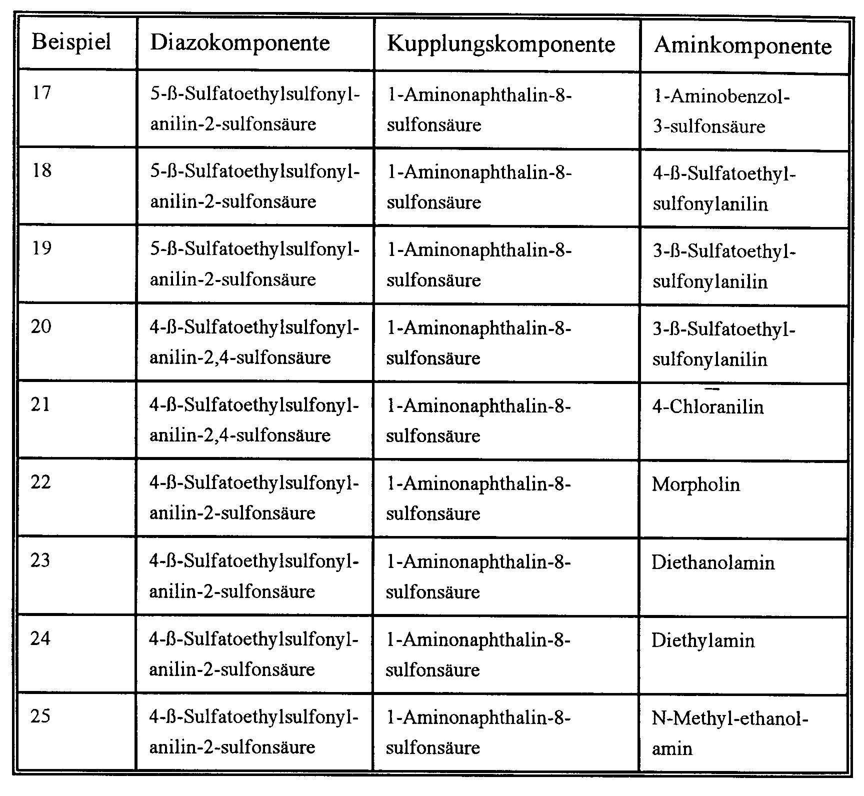

Der λₘₐₓ-Wert für umgesetzte Farbstoffe beträgt

| Beispiel | nm |
|---|---|
| 2 | 422 |
| 3 | 422 |

### Beispiel 26

Diazotierung und Kupplung erfolgen nach den Angaben von Beispiel 1. Bei der Kondensation werden anstelle von 19 g Cyanurchlorid nur 9,5 g eingesetzt und bei 10 bis 12°C und pH 5 bis 6, solange acyliert bis ca. 50 % des eingesetzten Aminoazofarbstoffs acyliert sind. Anschließend erhöht man die Temperatur auf 45 bis 55°C und hält den pH im Bereich von 5 bis 6.

Nach beendeter Kondensation wird der Farbstoff aus der Klaren Lösung mit Kaliumchlorid ausgesalzen, abgesaugt, bei 70°C im Umlufttrockenschrank getrocknet und gemahlen. Man erhält ein orangefarbenes Pulver, das sich leicht in Wasser mit gelber Farbe löst.

Der Farbstoff entspricht folgender Formel 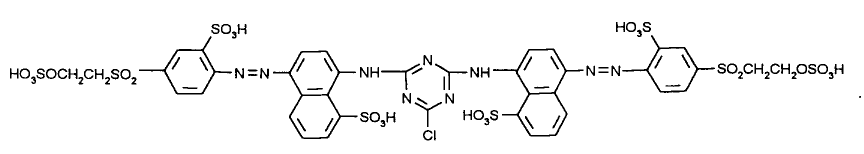
Es färbt Baumwolle nach einem für diese Reaktivgruppen üblichen Färbeverfahren in klaren rotstichigen gelben Farbtönen.

### Beispiel 27 und 28

Verfährt man nach den Angaben von Beispiel 26, nimmt jedoch in Stufe b) anstelle von 21,3 g 1-Aminonaphthalin-8-sulfonsäure die gleiche Menge 1-Aminonaphthalin-6- bzw. -7-sulfonsäure, so erhält man gleichfalls wertvolle Baumwollreaktivfarbstoffe, die Baumwolle in klaren rotstichig gelben Tönen färben.

## Patentansprüche

1. Reaktivfarbstoff der Formel 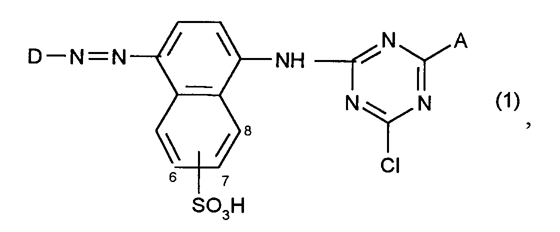 worin
D für 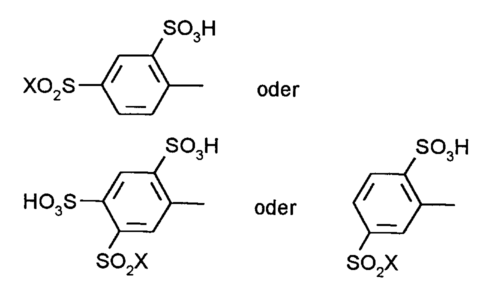 worin
X CH₂CH₂Z oder CH=CH₂ bedeutet,
wobei
Z einen unter Färbebedingungen abspaltbaren Rest darstellt, die Sulfogruppe in 6-, 7- oder 8-Stellung gebunden ist, und
A Chlor, Wasserstoff, Methyl oder durch Chlor und/oder Methyl substituiertes Phenyl bedeutet oder für SR¹, OR² oder für NR³R⁴ steht,
worin
R¹ gegebenenfalls substituiertes C₁-C₄-Alkyl oder gegebenenfalls substituiertes Phenyl, Naphthyl oder 2-Benzthiazolyl bedeutet,
R² für Wasserstoff, gegebenenfalls substituiertes C₁-C₄-Alkyl oder gegebenenfalls substituiertes Phenyl oder Naphthyl steht,
R³ für Wasserstoff oder einen gegebenenfalls substituierten aliphatischen, cycloaliphatischen, heterocyclischen oder araliphatischen Rest steht und
R⁴ für Wasserstoff oder einen gegebenenfalls substituierten aliphatischen, cycloaliphatischen, heterocyclischen, araliphatischen oder aromatischen Rest steht oder worin R³ und R^{4,} gegebenenfalls unter Einschluß eines weiteren Heteroatoms, einen 5- oder 6-gliedrigen Ring bilden können oder
worin
A für den Rest 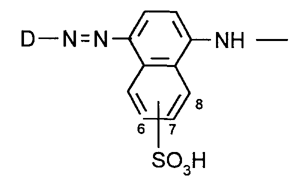 steht.

2. Reaktivfarbstoff nach Anspruch 1, dadurch gekennzeichnet, daß Z bedeutet -OPO₃H₂, -OCOCH₃, -Cl, -OSO₂CH₃ oder -OSO₃H.

3. Reaktivfarbstoff nach Anspruch 1, dadurch gekennzeichnet, daß X für CH=CH₂ steht.

4. Reaktivfarbstoff nach wenigstens einem der vorhergehenden Ansprüche, dadurch gekennzeichnet, daß er einer der Formeln (2) bis (7) entspricht 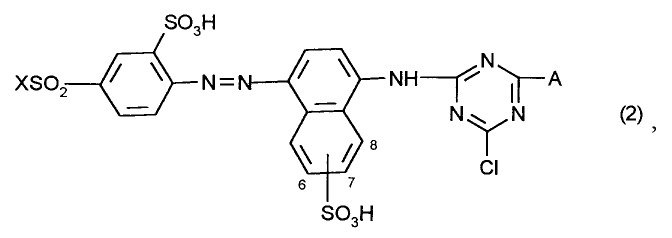 worin die Sulfogruppe in 6-, 7- oder 8-Stellung stehen kann; 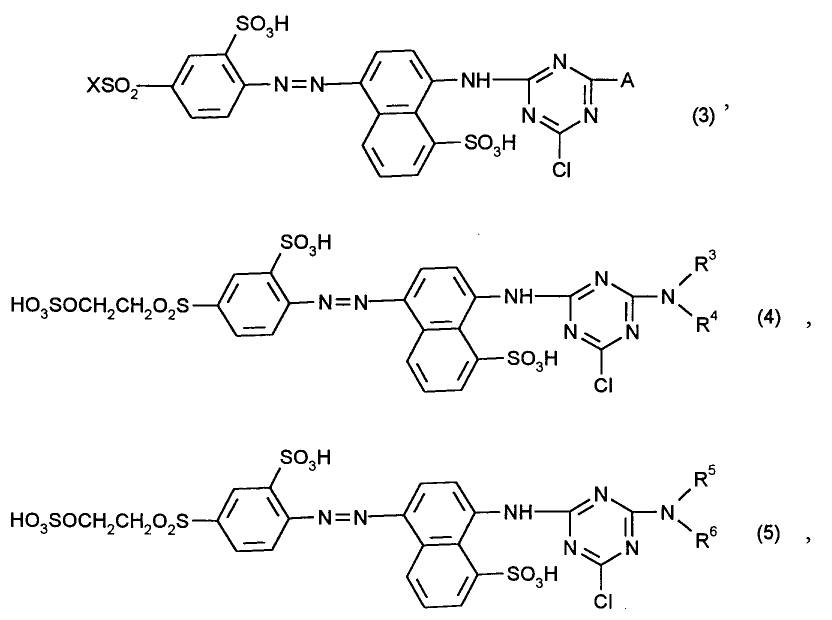 worin
R⁵ Wasserstoff, Methyl, Ethyl, Hydroxyethyl und
R⁶ Phenyl bedeutet, das gegebenenfalls durch Sulfo, Carboxy, Chlor, Methyl, Ethyl, Methoxy, Ethoxy und/oder β-Sulfatoethylsulfonyl substituiert ist; 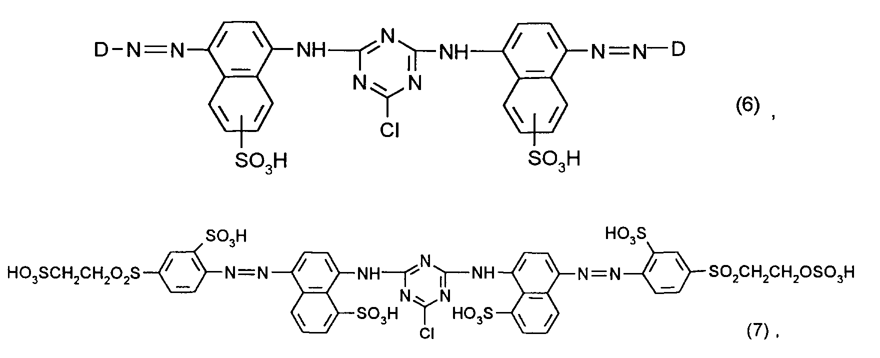 worin die Substituenten die in Anspruch 1 angegebene Bedeutung haben.

5. Farbstoff gemäß Anspruch 1 der Formel

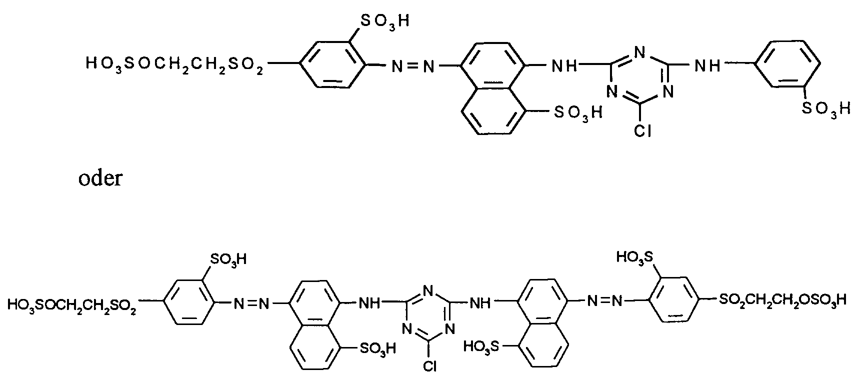

6. Verfahren zur Herstellung eines Farbstoffes gemäß Anspruch 1, dadurch gekennzeichnet, daß man Diazokomponenten der Formel
D-NH₂ (6),
worin D die angebene Bedeutung hat, diazotiert und mit Kupplungskomponenten der allgemeinen Formel 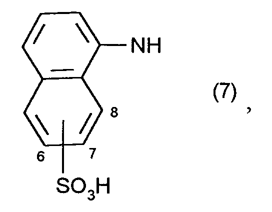 worin die Sulfogruppe in 6-, 7- oder 8-Stellung steht, im pH-Bereich von 2 bis 6 zu einem Aminoazofarbstoff der Formel 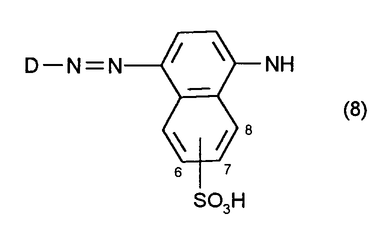 vereinigt und diesen dann mit einem Triazinderivat der allgemeinen Formel 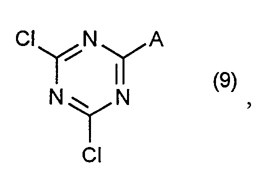 worin A die angegebene Bedeutung hat, zu einem Farbstoff der Formel (1) kondensiert.

7. Verfahren zum Färben oder Bedrucken von Hydroxyl- oder Amidgruppen enthaltenen Materialien mit einem Reaklivfarbstoff, dadurch gekennzeichnet, daß man das Material mit einem Farbstoff gemäß Anspruch 1 färbt oder bedruckt.

8. Gefärbte Materialien, insbesondere auf Basis Cellulose oder Polyamid, die wenigstens teilweise mit einem Farbstoff gemäß Anspruch 1 gefärbt oder bedruckt worden sind.
